# EUROPEAN PATENT APPLICATION

(11) **EP 0 874 334 A1**
(43) Date of publication of application: **28.10.1998**
(21) Application number: 97201169.6
(22) Date of filing: 21.04.1997
(51) Int. Cl.: G07F 7/10, G06K 7/06

(54) **Secure application module for multiservice applications and a terminal provided with such a secure application module**

(71) Applicant: Koninklijke PTT Nederland N.V., 9726 AE Groningen (NL)
(72) Inventor: Pieterse, Rob, 2111 ZL Aerdenhout (NL)
(74) Representative: de Bruijn, Leendert C.

(57) **Abstract**

A terminal (5) and a method to operate such a terminal, the terminal including:
- a secure application module (13);
- read out means (7) for reading out a chip card (1);
- a plurality of secure unrelated service slots (S(j), j = 1, 2, 3, ..., n) located within the secure application module (13);
- an operating system (9) for controlling the card read out means (7) and the plurality of service slots (S(j));
wherein the secure application module (13) is provided with an internal bus (11) and each of the service slots (S(j)) are connected to the internal bus.

## Description

### Background of the Invention

The present invention relates to a terminal provided with:
- a secure application module;
- read out means for reading out a chip card;
- a plurality of secure unrelated service slots, located within the secure application module;
- an operating system for controlling said card read out means and said plurality of service slots.

Such a terminal is described in European patent applications 96201967.5 and 96202832.0, filed by the Applicant of the present patent application. Both of these European patent applications form prior art under Articles 54(3) and 54(4) EPC. Here, "unrelated" service slots are separate service slots each comprising means and software to support separate services to users of the chip cards and the terminal.

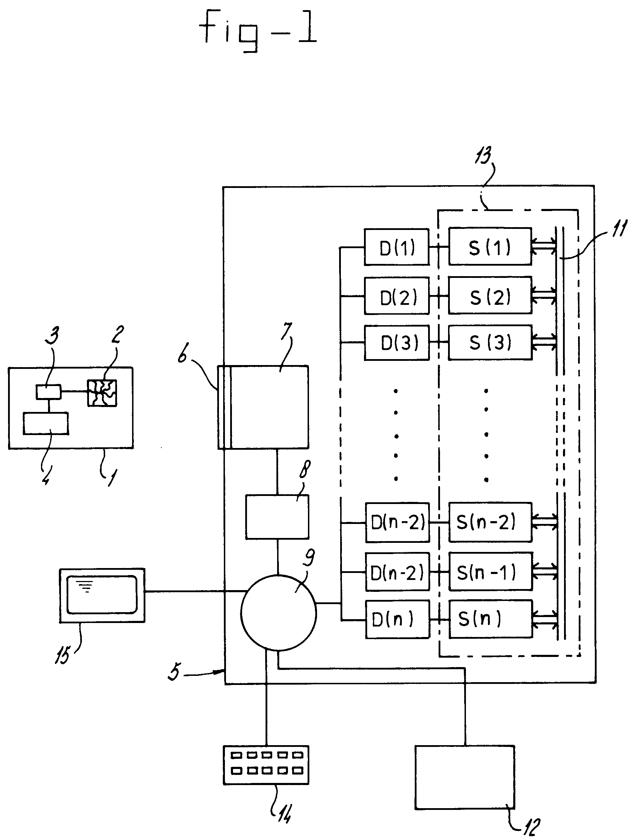

In order to further illustrate the problem to be solved by the present invention, reference is made to figure 1.

Apart from the bus 11, the elements shown in figure 1 can be considered to be known from the prior art referred to above.

Figure 1 schematically shows a chipcard 1, provided with a contact field 2, a memory 4, and a microprocessor 3. The microprocessor 3 is connected to both the contact field 2 and the memory 4. The contact field 2 is provided with at least one contact pad for contacting different contact terminals (not shown) within readout means 7 of a terminal 5. Figure 1 shows the basic structure of the chipcard 1. However, it is to be understood that the chipcard may be provided with additional means to provide additional services, like a small display (not shown).

The readout means 7 of the terminal 5 are provided with an opening 6, usually having the form of a slot, for receiving the chipcard 1. A driver 8 is connected to the readout means 7 to drive the readout means. The driver 8 is connected to an operating system 9 which controls the driver 8. The operating system 9 may be any processing unit known from the prior art, which is provided with suitable software. However, hardware embodiments related to the operating system 9 are intended to fall within the scope of the claims of the present invention.

A keyboard 14 is provided which may be located outside the terminal 5, as shown. However, the keyboard 14 may also be part of the terminal 5. The keyboard 14 is connected to the operating system such that the operating system 9 can receive data input by a user.

A display 15 may be provided, which is connected to the operating system 9 for displaying information and requests to the user. The display 15 is shown in figure 1 to be a separate unit. However, display 15 can be part of the terminal 5. An output device 12 may be provided to provide the user with an output associated with a service required by the user. The output device 12 is connected to the operating system 9. The output device 12 is shown in figure 1 as a separate unit, however, it may be part of the terminal 5. The output device may, for instance, be a printer for providing tickets or leaflets to the user, or for printing a printed stamp on envelopes or packages inserted by the user. The terminal 5 is also provided with a secure application module 13, also known as SAM. The secure application module 13 has been indicated in figure 1 with a dot-dashed line to indicate that it is a separate unit within the terminal 5. This separate unit is a physically closed box, e.g. in the form of a chip within a sealed housing, and forms a secure environment, as is known to persons skilled in the art.

Within the secure application module 13 there is a plurality of service slots S(j) (j = 1, 2, 3, ..., n). The concept of service slots has been described in European patent applications 96201967.5 and 96202832.0, referred to above. Any of the service slots S(j) comprises software related to one predetermined service to be given to the user. Service slot S(1) can, for instance, be associated with an electronic purse, e.g. under the responsibility of a bank, service slot S(2) with a saving or bonus program, e.g. Airmiles under the responsibility of the Airmiles consortium, service slot S(3) with providing a postage stamp on an envelope by means of the printer 12, e.g. under the responsibility of a postal organisation, etc. Other services could be the provision of railway tickets, air tickets, tickets for a concert, telephone services, facsimile services, etc.

The service slots S(j) are driven by drivers D(i), (i = 1, ..., n). These drivers are therefor logically connected to the individual service slots S(j) and to the operating system 9 which controls the drivers D(i).

In order to allow an easy communication with the chipcard 1, the chipcard 1 has its memory 4 also structured by means of service slots, as explained in detail in the European patent applications 96201967.5 and 96202832.0.

Because of the subdivision into different service slots the system shown in figure 1 can support different services provided by different service providers. Any of the services are controlled by the operating system 9 but they function entirely separately with different cryptographic securities under different responsibilities. For instance, assume that one service which can be supported is printing a printed stamp on an envelope by means of the printer 12. Further assume that this service is supported by service slot S(3) of the secure application module 13. A user can use such a service by inserting his chipcard 1 into the readout means 7. However, in order to have the printer 12 printing a stamp on an envelope inserted by the user into the printer 12, he needs to pay a predetermined amount of money corresponding to the value of the printed stamp. The money can be paid electronically if the chipcard supports an electronic purse service. Then, the chipcard 1 has at least one service slot with suitable software for the electronic purse application and another service slot with suitable software for the printed stamp application. Moreover the secure application module 13 has one service slot, say S(1), dedicated to the electronic purse application.

Since the stamp may only be printed after the money has been paid, in this example the service slot S(1) can be seen as a "master" service slot, whereas service slot S(3) is, then, a "slave" service slot. Only when the service slot S(1) informs the operating system 9, that the electronic payment has been completed, the service slot S(3) is allowed to carry out its function of providing a printed stamp through the printer 12.

In order to complete a payment transaction between the electronic purse facility of the chipcard 1 and the service slot S(1) the operating system 9 establishes a communication between the service slot S(1) and the electronic purse service slot on the chipcard 1. When the payment has been completed, the service slot S(1) informs the operating system 9 that it is allowed to activate the service slot S(3) in order to have a cryptographically safe stamp, of which the value corresponds to the electronic payment made, printed on the envelope.

Any of the service slots S(j) within the secure application module 3 operates entirely automatically with its own cryptographic keys. No direct interference from the outside is possible.

However, there is one serious drawback since it is the operating system 9 outside the secure application module 13 which is entirely controlling the service slot S(3) to allow it to work. Sometimes a terminal 5 is located in a safe environment, e.g., a post office in which it is very difficult to manipulate the operating system 9. However, it is emphasized that, in the near future, sometimes terminals 5 may be no more than general purpose computers provided with a secure application module, which are accessible to a wider public. Then, a user will be able to manipulate the content of the operating system 9 by means of the keyboard 14. It is also possible that the terminal 5 has an open connection (not shown) to the telephone network and that one can communicate with the operating system 9, e.g., through internet.

Then, it is principally possible to, e.g., have a stamp printed of a value of say one guilder after the electronic purse facility has completed a payment transaction of only five cents. In such an arrangement there is no cryptographically safe connection between a master service slot and a slave service slot. The connection is provided by the operating system 9 which is difficult if not impossible to secure against infringement.

### Summary of the Invention

Therefore, it is an object of the present invention to provide a terminal in which cryptographically safe communications between different service slots within a secure application module can be provided.

The object of the present invention is obtained by a terminal as defined in the outset which is characterized in that said secure application module is provided with an internal bus and said secure unrelated service slots are connected to said internal bus.

Moreover, the present invention is directed to a method of operating a terminal as defined above, said operating system of said terminal being connected to input means for receiving input data from a user, in accordance with the following steps:
a. receiving input instructions from said user, which relate to a desired service;
b. selecting one of said service slots to be a master service slot and at least one other of said service slots to be a slave service slot in dependence on said input instructions, said master service slot permitting said at least one slave service slot to carry out at least one predetermined service;
c. establishing and controlling communication between said master service slot and a corresponding service slot on a chip card inserted in said read out means;
   characterized by the following step:
d. said master service slot communicating with said at least one slave service slot via said internal bus within said secure application module in order to send an enable signal to enable said at least one slave service slot to carry out said predetermined service after said master service slot has completed its service.

Additionally, the present invention is related to a secure application module comprising a plurality of service slots, characterized in that said secure application module is provided with an internal bus and said service slots are connected to said internal bus.

### Brief Description of the Drawings

The present invention will be illustrated with reference to the figures which are intended to illustrate the principles of the invention and not to limit its scope, which is only limited by the appending claims.
Figure 1 shows a chipcard and a terminal in accordance with the present invention;
figure 2 shows a flow diagram of a method for operating a system as shown in figure 1.

### Detailed Description of the Embodiments

The system as shown in figure 1 has been largely described above. The only feature not referred to is an internal bus 11 within the secure application module 13 to which, in the embodiment shown, each of the service slots S(j) are connected. The bus 11 is an additional feature to the system already described in European patent applications 96201967.5 and 96202832.0. The addition of the bus 11 provides the different service slots S(j) with the possibility to communicate with one another within the secure application module 13. Thus, the possibility is provided of a safe communication connection between different service slots S(j) and avoiding the need of a communication via the operating system 9 which is too easily accessible by unauthorized persons.

It is observed that the way in which the different service slots S(j) can communicate with one another through internal bus 11 is not limited to one specific type. The communication may include any type of communication of the prior art, including, for instance, addressing methods to select only one or more service slots.

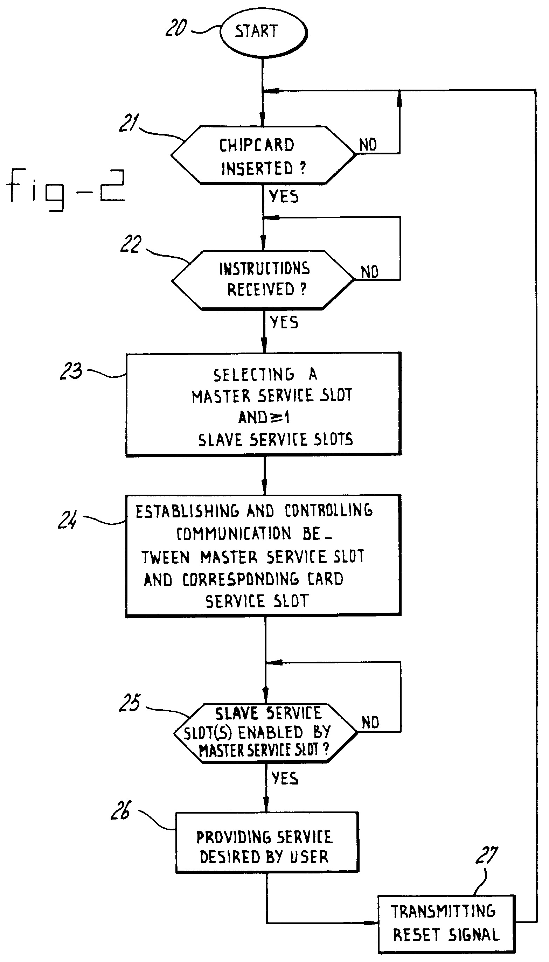

Generally, the system according to figure 1 can operate as indicated by the flow diagram shown in figure 2.

In figure 2, the flow diagram relates to the functioning of the operating system 9.

In step 20, the operating system 9 is started.

In step 21, the operating system 9 waits for a user to insert a chipcard 1.

After the user has inserted the chipcard 1 into the readout means 7, this is detected by the operating system 9.

The operating system 9 can ask predetermined questions to the user through the display 15. The user can answer these questions by means of the keyboard 14, or by any other type of input means. One such question may, for example, relate to a personal identification number (PIN). It is emphasized that some of the services may only be provided when the user has input his PIN.

Other questions may relate to the type of service required by the user. One such service may be the printing of a stamp on an envelope by the printer 12. Then, preferably, that service is coupled to the service of electronic payment of the required amount of money through an electronic purse facility on the chipcard 1.

Reference number 22 refers to a block in which the operating system 9 waits until the user has given all required instructions to allow the start of a service indicated by the user.

The present invention relates to a situation in which at least one service has to be completed before another service can start. E.g., a payment transaction has to be completed before the service of printing a stamp on an envelope by the printer 12 may start. Therefore, in step 23, the operating system 9 selects which of the service slots necessary to provide the service required by the user is a master service slot and which other service slot(s) is (are) slave service slot(s), i.e., may only start functioning after the master service slot has completed its function. Service slot S(1) is, for instance, related to the electronic purse service, which is the master service slot in the situation indicated above in which service slot S(3) is the slave service slot associated with the printed stamp facility.

In step 24, the operating system 9 first of all establishes and controls a communication between the electronic purse service slot S(1) of the secure application module 13 and a corresponding service slot on the chipcard 1. These two service slots communicate with one another in order to complete a required payment transaction. After that, the service slot S(1) informs the operating system 9, that the payment transaction has been completed properly.

Moreover, the master service slot S(1) generates an enable signal on the bus 11. In the present example, this enable signal enables any of the other service slots S(2) ... S(n). The enable signal may, for example, include the amount of electronic money transferred to the electronic purse service slot S(1). Thus, any of the other service slots is able to check the amount of money paid to the service slot S(1). Any of the other service slots S(2) ... S(n) is, then, only allowed to provide a service which corresponds to that amount of money. The instruction to a selected one of the other service slots (the slave service slots) to start providing the desired service is given by the operating system 9. The enable signal may have any form known in the art. The service slots may be arranged such that they are addressable such that the enable signal used may comprise address data to select a desired service slot.

Step 25 indicates that the operating system 9 waits for a message from the master service slot indicating that it has generated an enable signal as indicated above on the bus 11. Then, the operating system 9 can start the desired service by driving the corresponding service slot through the corresponding driver D(i). This is indicated in step 26. In step 26, in order to provide its service, the service slot concerned may communicate with an associated service slot on the chip card 1. Alternatively, the service slot concerned may communicate with a terminal specific module (not shown) to complete its service.

Once the master service slot has transmitted an enable signal through the bus 11, any of the slave service slots allowed to be enabled by said enable signal (when an addressing technique is used, only the addressed service slots will respond) are preferably allowed to do so once. I.e., preferably, they are not allowed to provide the service concerned two or more times upon one enable signal of the master service slot. This may be achieved by providing any service slot with a status bit which is disabled by the enable signal, after which the service concerned can be provided only once. Only a new enable signal on bus 11 may then enable one, some or all of the slave service slots again.

The slave service slot which is the last to complete the entire service required by the user, may, in one possible communication technique, transmit a reset signal to the master service slot through bus 11 after completing the service. This is indicated in step 27 in figure 2. Only after receipt of such a reset signal, the master service slot (or another service slot becoming a master service slot) is allowed to generate a new enable signal.

In the example given above, the master service slot is related to an electronic purse facility. However, the master service slot can be associated to any other type of service which has to be completed first, before one or more other service slots may start providing a desired service. For instance, the master service slot may only relate to an identification procedure for identifying the user of the chipcard 1.

It is observed that the service given to the user need not necessarily be given via the output means 12 but can also consist of sending a certain signal to the memory 4 of the chipcard 1. For instance, the service required may relate to saving, e.g., airmiles saved in an airmiles service slot in memory 4 of the chipcard 1. Another type of service may be allowing to make a telephone call, etc.

If anything goes wrong, for instance the user pulls his card out of the readout means 7 prior to the completion of the desired service, the master service slot will generate the reset signal under the control of the operating system 9 which is able to detect that the chipcard 1 has been pulled out too early.

## Claims

1. A terminal (5) provided with:
- a secure application module (13);
- read out means (7) for reading out a chip card (1);
- a plurality of secure unrelated service slots (S(j), j = 1, 2, 3, ..., n) located within said secure application module (13);
- an operating system (9) for controlling said card read out means (7) and said plurality of service slots (S(j));
characterized in that
said secure application module (13) is provided with an internal bus (11) and said secure unrelated service slots (S(j)) are connected to said internal bus.

2. A terminal according to claim 1 characterized in that one of said service slots is a master service slot and the other service slots are slave service slots, said master service slot is some form of a service authorization slot and controlling said slave service slots via said internal bus.

3. A terminal according to claim 2 characterized in that said master service slot is an electronic purse service slot.

4. A method of operating a terminal according to any of the preceding claims, said operating system (9) of said terminal being connected to input means (14) for receiving input data from a user, in accordance with the following steps:
a. receiving input instructions from said user, which relate to a desired service (step 22);
b. selecting one of said service slots to be a master service slot and at least one other of said service slots to be a slave service slot in dependence on said input instructions (step 23), said master service slot permitting said at least one slave service slot to carry out at least one predetermined service;
c. establishing and controlling communication between said master service slot and a corresponding service slot on a chip card (1) inserted in said read out means (7) (step 24);
characterized by the following step:
d. said master service slot communicating with said at least one slave service slot via said internal bus (11) within said secure application module (13) in order to send an enable signal to enable said at least one slave service slot to carry out said predetermined service after said master service slot has completed its service (step 25).

5. A method according to claim 4 characterized in that said master service slot is an electronic purse service slot.

6. Method according to claims 4 or 5, characterized in that upon receiving said enable signal said at least one slave service slot is enabled to carry out said predetermined service only once.

7. Method according to claims 4, 5, or 6, characterized in that said at least one slave service slot has completed said predetermined service a reset signal is generated and transmitted to said master service slot through said internal bus (11).

8. A secure application module (13) comprising a plurality of service slots (S(j), j = 1, 2, 3, ..., n) characterized in that said secure application module (13) is provided with an internal bus (11) and said service slots (S(j)) are connected to said internal bus.
